# EUROPÄISCHE PATENTSCHRIFT

(11) **EP 0 879 977 B1**
(45) Veröffentlichungstag und Bekanntmachung des Hinweises auf die Patenterteilung: **14.05.2003**
(21) Anmeldenummer: 98103078.6
(22) Anmeldetag: 21.02.1998
(51) Int. Cl.: F16J 15/32

(54) **Dichtungsanordnung**
Sealing arrangement
Dispositif d'étanchéité

(30) Priorität: 23.05.1997 DE 19721692
(43) Veröffentlichungstag der Anmeldung: 25.11.1998
(73) Patentinhaber: Carl Freudenberg KG, 69469 Weinheim (DE)
(72) Erfinder: Vogt, Rolf, 68723 Oftersheim (DE)

(56) Entgegenhaltungen:
- US-A- 4 709 930
- US-A- 5 044 642
- US-A- 5 350 181

## Beschreibung

### Technisches Gebiet

Die Erfindung betrifft eine Dichtungsanordnung nach dem Oberbegriff von Anspruch 1 und ein Verfahren zur Herstellung der abzudichtenden Oberfläche.

### Stand der Technik

Eine derartige Dichtungsanordnung sowie ein Verfahren sind beispielsweise aus der DE-OS 15 433 bekannt. Zur Erzielung eines Rückförderdralls ist eine Welle mit schräg zur Längsachse aufgebrachten Vertiefungen versehen, wobei der Rückförderdrall an der Stelle des größten durch den Radialwellendichtring ausgeübten Drucks infolge der damit verbundenen Formänderung und des damit verbundenen Verschleißes nach kurzer Betriebszeit entfernt worden ist, so daß überhaupt kein weiterer Verschleiß des Dichtrings auftreten kann. Unmittelbar in der Nachbarschaft dieses ausgelöschten Rückförderdralls wirken die vorhandenen Riefen aber nach wie vor rückfördernd. In der vorbekannten Druckschrift ist beschrieben, daß ein Rückfördergewinde die Dichtkante des Radialwellendichtrings zerstören würde.

Die Vertiefungen werden durch ein einfaches Einstechverfahren, beispielsweise durch rotierende Schleifscheiben oder mit einer mit schmiergelndem Pulver versehenen Polierscheibe erzeugt. Beim Schleifen von Oberflächen ist von Nachteil, daß nicht vorhersehbar ist, ob die Dichtungsanordnung während ihrer bestimmungsgemäßen Verwendung ein ausreichend gutes Dichtungsverhalten aufweisen wird. Die geschliffene Oberfläche weist eine nicht vorherbestimmbare Anzahl von wendelförmig verlaufenden, unterschiedlich tief ausgebildeten, mehrgängigen Nuten auf, wobei sich während der Herstellung der Oberfläche die Anzahl und die Gestalt der Gänge, abhängig vom Zustand der Schleifscheibe, von dem Schwingungsverhalten der Antriebswelle der Schleifscheibe und/oder der zu schleifenden Oberfläche und der räumlichen Zuordnung der Rotationsachsen zueinander stets unkalkulierbar verändert. Bei der eher zufällig entstandenen Gestalt der vielgängigen Nuten auf der Oberfläche, kann das Volumen von abzudichtendem Medium innerhalb der Nuten so groß sein, daß der Radialwellendichtring nicht mehr in der Lage ist, das abzudichtende Medium in den abzudichtenden Raum zurückzufördern.

### Darstellung der Erfindung

Der Erfindung liegt die Aufgabe zugrunde, eine Dichtungsanordnung der eingangs genannten Art derart weiterzuentwickeln, daß der bearbeitungsbedingt entstehende Drall auf der Oberfläche meßtechnische erfaßbar ist und daß der Drall in seinen Auswirkungen auf das Dichtheitsverhalten der Radialwellendichtringe quantifizierbar ist, um Ausfälle der Dichtungsanordnung aufgrund einer ungünstigen Oberflächenbeschaffenheit zu vermeiden. Die Oberfläche soll derart beschaffen sein, daß der Radialwellendichtring, unabhängig von der Drehrichtung des Maschinenelements in der Lage ist, die zur Schmierung der Dichtkante erforderlichen Volumina in den abzudichtenden Raum zurückzufördern.

Diese Aufgabe wird erfindungsgemäß mit den Merkmalen von Anspruch 1 und Anspruch 7 gelöst. Auf vorteilhafte Ausgestaltungen nehmen die Unteransprüche Bezug.

Zur Lösung der Aufgabe ist es vorgesehen, daß in die Oberfläche eine wendelförmig verlaufende Nut mit gerundetem Nutgrund eingedreht ist und daß der Nutgrund einen Rundungsradius von 0,4 bis 1,6 mm aufweist und die Tiefe der Nut weniger als 15 µm beträgt. Im Gegensatz zu geschliffenen Oberflächen sind gedrehte Oberflächen wesentlich kostengünstiger herstellbar. Außerdem ist der durch das Drehen erzeugte Drall auf der Oberfläche meßtechnisch erfaßbar und in seinen Auswirkungen auf das Dichtheitsverhalten der Radialwellendichtringe quantifizierbar. Es besteht daher die Möglichkeit, einfach und kostengünstig zu überprüfen, ob die gedrehte Oberfläche fachgerecht hergestellt wurde und die erforderlichen Parameter eingehalten wurden. Je nach Drehrichtung fördert die gedrehte Oberfläche das abzudichtende Medium mehr oder weniger stark in axialer Richtung auf der Oberfläche entlang. Bei einem Rundungsradius von 0,4 bis 1,6 mm und einer Tiefe der Nut von weniger als 15 µm ist der Radialwellendichtring in der Lage, unabhängig von der Drehrichtung des Maschinenelements die zur Schmierung der Dichtkante erforderlichen Volumina von abzudichtendem Medium in den abzudichtenden Raum zurückzufördern. Die Rückförderwirkung des Radialwellendichtrings wird durch die beiden Kegelflächen bedingt, wobei die dem abzudichtenden Raum zugewandte erste Kegelfläche mit der Rotationsachse einen steileren Kegelwinkel einschließt als die davon abgewandte zweite Kegelfläche.

Bevorzugt beträgt die Tiefe der Nut höchstens 10 µm. Durch die geringere Tiefe der Nut ist der betriebsbedingte Verschleiß an der Dichtkante des Radialwellendichtrings geringer, so daß die erfindungsgemäße Dichtungsanordnung weiter verbesserte Gebrauchseigenschaften während einer noch längeren Gebrauchsdauer aufweist.

Die einander benachbarten Wendel der Nut haben bevorzugt einen Mittelpunktsabstand von 0,03 bis 0,3 mm. Bei Mittelpunktsabständen bis 0,3 mm ist die drallbedingte Förderung des abzudichtenden Mediums aus dem abzudichtenden Raum, unabhängig von der Drehrichtung des Maschinenelements, in jedem Fall noch so gering, daß eine sichere Abdichtung durch den Radialwellendichtring gewährleistet ist. Mittelpunktsabstände von weniger als 0,03 mm sind wenig sinnvoll, da die Bearbeitung solcher Oberfläche vergleichsweise lange dauert und die meßtechnische Erfassung des Dralls deutlich schwieriger wird.

Zur Erzielung guter Gebrauchseigenschaften während einer langen Gebrauchsdauer ist es vorgesehen, daß die Breite der Dichtkante 1, 5 bis 4mal größer ist, als die Steigung der Nut.

Das Maschinenelement kann durch eine Welle oder den Laufring einer Kassettendichtung gebildet sein.

Außerdem betrifft die Erfindung ein Verfahren zur Herstellung der abzudichtenden Oberfläche einer Dichtungsanordnung. Zur Lösung der Aufgabe wird die Oberfläche mit einem Vorschub von 0,03 bis 0,3 mm, einer Schnittgeschwindigkeit von 80 bis 400 m/min. und einer Schnitttiefe von 0,04 bis 0,4 mm überdreht. Bei einem derartigen Verfahren wird ein Mittenrauhwert Rₐ nach DIN 4762 von 0,05 bis 2 µm erreicht. Der Mittenrauhwert Rₐ ist der arithmetische Mittelwert der Beträge aller Profilwerte des Rauhheitsprofils. Außerdem wird eine Rauhtiefe R_{z} gemäß DIN 4768 erreicht, die 0,2 bis 10 µm beträgt. Die gemittelte Rauhtiefe R_{z} ist der Mittelwert aus den Einzelrauhtiefen aufeinanderfolgender Einzelmeßstrecken.

Die maximale Rauhtiefe Rₘₐₓ nach DIN 4768 ist die größte Einzelrauhtiefe innerhalb der Gesamtmeßstrecke und beträgt bei dem zuvor beschriebenen Verfahren höchstens 15 µm.

Die beanspruchte Dichtungsanordnung sowie das Verfahren zur Herstellung der abzudichtenden Oberfläche werden nachfolgend anhand der beigefügten Zeichnungen weiter erläutert.

### Kurzbeschreibung der Zeichnung

Diese zeigen:
Figur 1 ein erstes Ausführungsbeispiel der erfindungsgemäßen Dichtungsanordnung in schematischer Darstellung, bei der das Maschinenelement als Welle ausgebildet ist,
Figur 2 ein zweites Ausführungsbeispiel der erfindungsgemäßen Dichtungsanrodnung in schematischer Darstellung, bei der das Maschinenlement als Laufring einer Kassettendichtung ausgebildet ist,
Fig. 3 den vergrößerten Ausschnitt "A" aus den Figuren 1 und 2 und Figur 4 die Oberfläche in vergrößerter Darstellung.

### Ausführung der Erfindung

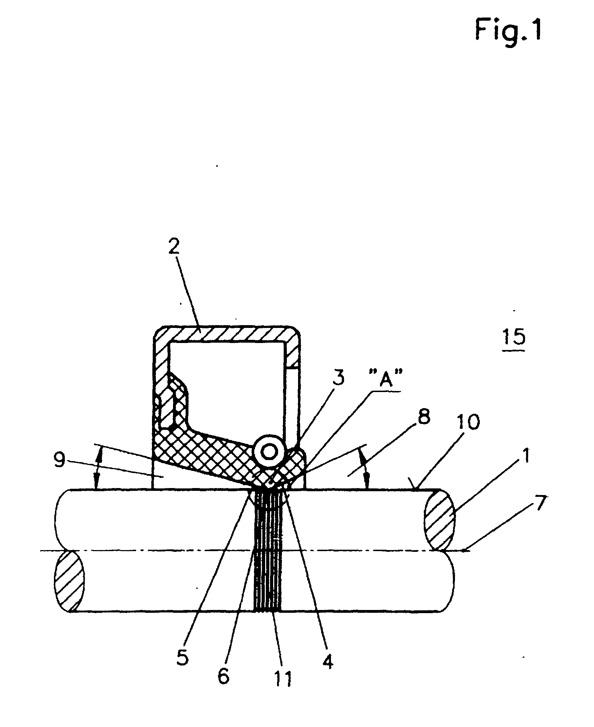

In Figur 1 ist ein erstes Ausführungsbeispiel einer Dichtungsanordnung gezeigt, bei der das Maschinenelement 1 durch eine abzudichtende Welle gebildete und von einem Radialwellendichtring 2 außenumfangsseitig umschlossen ist. Die Dichtlippe 3 des Radialwellendichtrings 2 weist eine Dichtkante 6 auf, die durch zwei einander durchschneidende Kegelflächen 4, 5 begrenzt ist. Das abzudichtende Medium befindet sich innerhalb des abzudichtenden Raums, der mit dem Bezugszeichen 15 versehen ist.

Die dem abzudichtenden Raum 15 zugewandte erste Kegelfläche 4 schließt mit der Rotationsachse 7 einen ersten Kegelwinkel 8 ein, der größer ist als der zweite Kegelwinkel 9, den die zweite Kegelfläche 5 mit der Rotationsachse 7 begrenzt. Die Dichtkante 6 berührt die Oberfläche 10 unter radialer Vorspannung dichtend, wobei die Breite der Dichtkante 6 1,5 bis 4mal größer ist als die Steigung der Nut 11, so daß auch bei stillstehendem Maschinenelement 1 eine gute statische Abdichtung gewährleistet ist.

Der Teilbereich der Oberfläche 10, der die Lauffläche für die Dichtkante 6 bildet, ist mit zumindest einer wendelförmig verlaufenden Nut 11 versehen, die einen gerundeten Nutgrund 12 aufweist, wobei der Nutgrund 12 einen Rundungsradius von 0,4 bis 1,6 mm, in diesem Ausführungsbeispiel 1,0 mm aufweist.

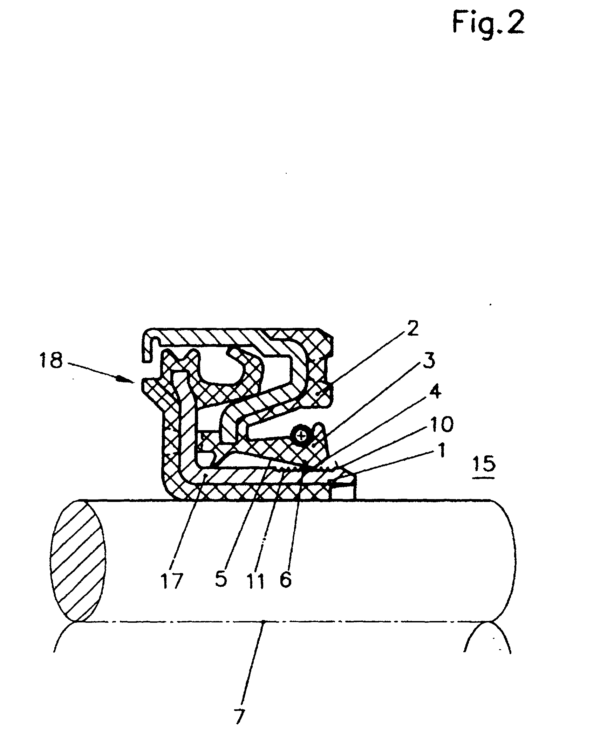

Fig. 2 zeigt ein zweites Ausführungsbeispiel der erfindungsgemäßen Dichtungsanrodnung und unterscheidet sich vom ersten Ausführungsbeispiel aus Fig. 1 insofern, als das abzudichtende Maschinenelement 1 durch den Laufring 17 einer Kassettendichtung 18 gebildet ist, der eine gedrehte Oberfläche 10 aufweist.

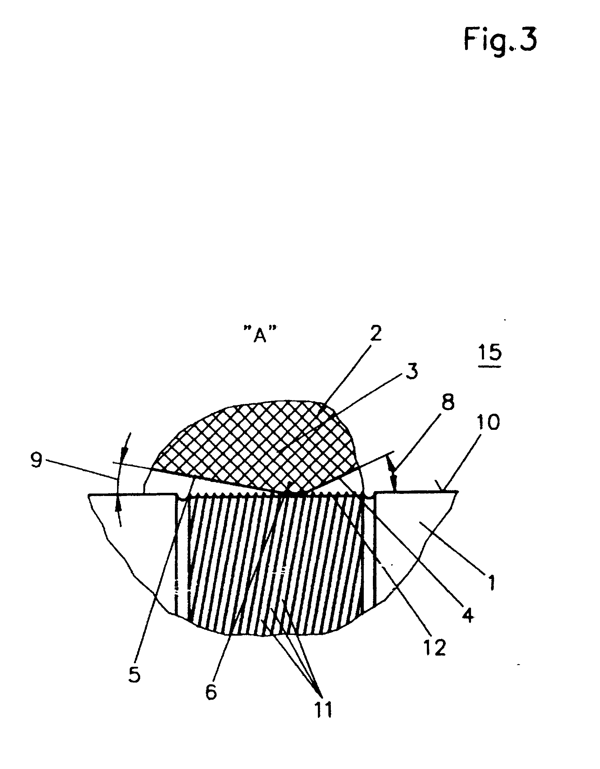

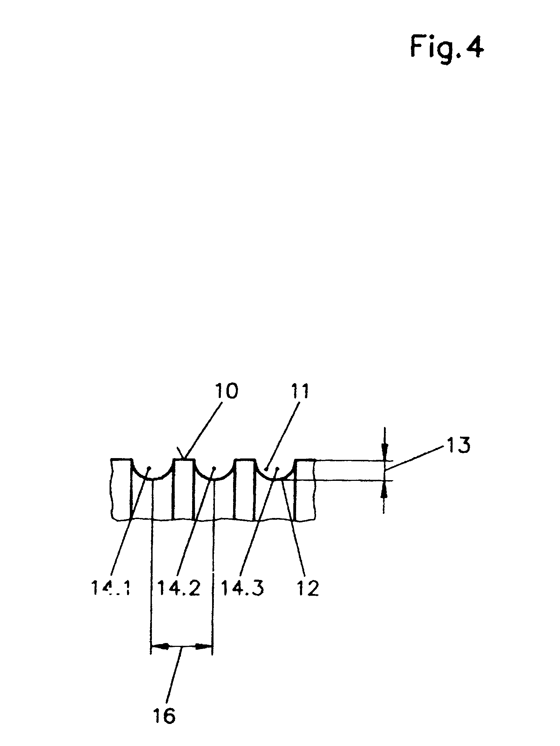

In den Figuren 3 und 4 ist der vergrößerte Ausschnitt "A" aus den Figuren 1 und 2 gezeigt.

Es besteht beispielsweise auch die Möglichkeit, die gesamte Oberfläche 10 durch das beanspruchte Verfahren herzustellen.

Die Oberfläche 10 wird dabei mit einem Vorschub von 0,03 bis 0,3 mm, einer Schnittgeschwindigkeit von 80 bis 400 m/min. und einer Schnittiefe von 0,04 bis 0,4 mm überdreht.

Eine gedrehte Oberfläche 10 als Lauffläche für Radialwellendichtringe 2 ist besonders einfach und kostengünstig herstellbar. Der Drall, der durch das erfindungsgemäße Verfahren auf der Oberfläche 10 entsteht, ist meßtechnisch exakt erfaßbar und in seinen Auswirkungen auf das Dichtheitsverhalten des Radialwellendichtrings quantifizierbar, da beim Drehvorgang ein Drall mit einer dem Vorschub entsprechenden Steigung entsteht.

Der Vorteil der erfindungsgemäßen Dichtungsanordnung besteht darin, daß bei Einhaltung der genannten Parameter der Radialwellendichtring 2 durch die Gestalt und Anordnung seiner beiden Kegelflächen 4, 5 unabhängig von der Drehrichtung des Maschinenelements 1 ein abzudichtendes Medium in Richtung des abzudichtenden Raums 15 zurückfördert, selbst dann, wenn die Nut 11 derart in die Oberfläche 10 eingedreht ist, daß abzudichtendes Medium axial aus dem vom abzudichtenden Raum 15 weggefördert wird.

## Patentansprüche

1. Dichtungsanordnung, umfassend eine abzudichtende Oberfläche (10) eines rotationssymmetrischen Maschinenelements (1) und einen Radialwellendichtring (2), dessen aus polymerem Werkstoff bestehende Dichtlippe (3) die Oberfläche mit einer durch zwei einander durchschneidende Kegelflächen (4, 5) gebildeteten Dichtkante berührt, wobei die dem abzudichtenden Raum (15) zugewandte erste Kegelfläche (4) mit der Rotationsachse (7) einen steileren Kegelwinkel (8) einschschließt als die davon abgewandte Kegelfläche (5), **dadurch gekennzeichnet, daß** in die Oberfläche (10) eine wendelförmig verlaufende Nut (11) mit gerundetem Nutgrund (12) eingedreht ist und daß der Nutgrund (12) einen Rundungsradius von 0,4 bis 1,6 mm aufweist und die Tiefe (13) der Nut (11) weniger als 15 µm beträgt.

2. Dichtungsanordnung nach Anspruch 1, **dadurch gekennzeichnet, daß** die Tiefe (13) höchstens 10 µm beträgt.

3. Dichtungsanordnung nach einem der Ansprüche 1 bis 2, **dadurch gekennzeichnet, daß** die einander benachbarten Wendel (14.1, 14.2, ...) der Nut (11) einen Mittelpunktsabstand von 0,03 bis 0,3 mm haben.

4. Dichtungsanordnung nach einem der Ansprüche 1 bis 3, **dadurch gekennzeichnet, daß** die Breite der Dichtkante (6) 1,5 bis 4mal größer ist als die Steigung der Nut (11).

5. Dichtungsanordnung nach einem der Ansprüche 1 bis 4, **dadurch gekennzeichnet, daß** das Maschinenelement (1) durch eine Welle gebildet ist.

6. Dichtungsanordnung nach einem der Ansprüche 1 bis 4, **dadurch gekennzeichnet, daß** das Maschinenelement (1) durch einen Laufring (17) einer Kassettendichtung (18) gebildet ist.

7. Verfahren zur Herstellung einer abzudichtenden Oberfläche einer Dichtungsanordnung nach einem der Ansprüche 1 bis 6, **dadurch gekennzeichnet, daß** die Oberfläche (10) mit einem Vorschub von 0,03 bis 0,3 mm, einer Schnittgeschwindigkeit von 80 bis 400 m/min. und einer Schnittiefe von 0,04 bis 0,4 mm überdreht wird.

## Claims

1. A sealing arrangement comprising a surface (10) to be sealed of a rotationally symmetrical machine element (1) and a radial shaft sealing ring (2), the sealing lip (3) of which is made of polymeric material and touches the surface with a sealing edge that is formed by two intersecting conical surfaces (4, 5), the first conical surface (4) facing in the direction of the space (15) to be sealed off and enclosing a steeper cone angle (8) with respect to the axis (7) of rotation than the conical surface (5) facing away therefrom, **characterized in that** a helical groove (11) with a rounded groove bottom (12) is turned in the surface (10), and **in that** the groove bottom (12) has a radius of curvature of 0.4 to 1.6 mm and the depth (13) of the groove (11) is less than 15 µm.

2. A sealing arrangement according to claim 1, **characterized in that** the depth (13) is 10 µm at maximum.

3. A sealing arrangement according to either of claims 1 and 2, **characterized in that** adjacent spirals (14.1, 14.2, ...) of the groove (11) are spaced apart at their midpoints by 0.03 to 0.3 mm.

4. A sealing arrangement according to any one of claims 1 to 3, **characterized in that** the width of the sealing edge (6) is 1.5 to 4 times greater than the pitch of the groove (11).

5. A sealing arrangement according to any one of claims 1 to 4, **characterized in that** the machine element (1) is formed by a shaft.

6. A sealing arrangement according to any one of claims 1 to 4, **characterized in that** the machine element (1) is formed by a barrel ring (17) of a cassette seal (18).

7. A method for the production of a surface to be sealed of a sealing arrangement according to any one of claims 1 to 6, **characterized in that** the surface (10) is turned with a feed of 0.03 to 0.3 mm, a cutting speed of 80 to 400 m/min and a cutting depth of 0.04 to 0.4 mm.

## Revendications

1. Dispositif d'étanchéité comprenant une surface (10) à rendre étanche d'un élément de machine (1) à symétrie de révolution et une bague d'étanchéité (2) à arbre radial dont la lèvre d'étanchéité (3) constituée d'un matériau polymère, touche la surface par un bord d'étanchéité formé par deux surfaces coniques (4,5) qui se coupent mutuellement, la première surface conique (4) tournée vers l'espace (15) à rendre étanche, incluant un angle de cône (8) avec l'axe de rotation (7), plus obtus que celui de la surface conique (5) faisant dos à ce dernier espace, **caractérisé en ce qu'**une rainure (11) se prolongeant en forme de spirale avec un fond de rainure (12) arrondi, est engagée en tournant dans la surface (10) et le fond de rainure (12) présente un rayon de courbure de 0,4 à 1,6 mm et la profondeur (13) de la rainure (11) est inférieure à 15 µm.

2. Dispositif d'étanchéité selon la revendication 1, **caractérisé en ce que** la profondeur (13) est au maximum de 10 µm.

3. Dispositif d'étanchéité selon l'une quelconque des revendications 1 à 2, **caractérisé en ce que** les spirales voisines l'une de l'autre (14.1, 14.2, ...) de la rainure (11) présentent un écart des centres de 0,03 à 0,3 mm.

4. Dispositif d'étanchéité selon l'une quelconque des revendications 1 à 3, **caractérisé en ce que** la largeur du bord d'étanchéité (6) est de 1,5 à 4 fois plus grande que la pente de la rainure (11).

5. Dispositif d'étanchéité selon l'une quelconque des revendications 1 à 4, **caractérisé en ce que** l'élément de machine (1) est formé par un arbre.

6. Dispositif d'étanchéité selon l'une quelconque des revendications 1 à 4, **caractérisé en ce que** l'élément de machine (1) est formé par une bague de roulement (17) d'un joint de cartouche (18).

7. Procédé de préparation d'une surface à rendre étanche d'un dispositif d'étanchéité selon l'une quelconque des revendications 1 à 6, **caractérisé en ce que** la surface (10) est tournée en surrégime avec une avance de 0,03 à 0,3 mm, une vitesse de coupe de 80 à 400 m/min et une profondeur de coupe de 0,04 à 0,4 mm.
